# EUROPÄISCHE PATENTSCHRIFT

(11) **EP 2 603 701 B1**
(45) Veröffentlichungstag und Bekanntmachung des Hinweises auf die Patenterteilung: **06.06.2018**
(21) Anmeldenummer: 11766919.2
(22) Anmeldetag: 20.09.2011
(51) Int. Cl.: F04D 29/08, F04D 29/40, F04D 29/42, F16J 15/10, F16J 15/12

(54) **ANORDNUNG MIT EINER DICHTUNG, DICHTUNG UND TURBOVERDICHTER**
ARRANGEMENT HAVING A SEAL, SEAL, AND TURBOCOMPRESSOR
SYSTÈME COMPRENANT UN JOINT D'ÉTANCHÉITÉ, JOINT D'ÉTANCHÉITÉ ET TURBOCOMPRESSEUR

(30) Priorität: 22.09.2010 DE 102010041208
(43) Veröffentlichungstag der Anmeldung: 19.06.2013
(73) Patentinhaber: Siemens Aktiengesellschaft, 80333 München (DE)
(72) Erfinder: HUTH, Sebastian, 41068 Mönchengladbach (DE); NASS, Dieter, 47447 Moers (DE)
(86) Internationale Anmeldenummer: PCT/EP2011/066278
(87) Internationale Veröffentlichungsnummer: WO 2012/038398

(56) Entgegenhaltungen:
- EP-A1- 0 766 007
- EP-A1- 1 933 038
- US-A- 2 330 425
- US-A- 3 083 023
- US-A- 5 799 953

## Beschreibung

Die Erfindung betrifft eine Anordnung mit einer ringförmigen Dichtung, die sich um eine Maschinenachse herum erstreckt, zur Abdichtung eines sich entlang einer Umfangsrichtung erstreckenden Spaltes mit L-förmigen Querschnitt zwischen einem Behältergrundkörper und einem Deckel, wobei sich ein Radialabschnitt des Spaltes in radialer Richtung und Umfangsrichtung erstreckt und ein Axialabschnitt sich in axialer Richtung und Umfangsrichtung erstreckt, wobei im Bereich, wo Radialabschnitt und Axialabschnitt zusammentreffen eine Dichtungskammer vorgesehen ist, welche radial und axial gegenüber dem angrenzenden Spaltabschnitten aufgeweitet ist, wobei in der Dichtungskammer eine Dichtung angeordnet ist, wobei in dem Radialabschnitt ein höherer Druck anliegt als in dem Axialabschnitt, welche Druckdifferenz mittels der Dichtung abgedichtet ist. Außerdem betrifft die Erfindung einen Verdichter, der die vorstehende Anordnung umfasst.

Bei Druckbehältern, insbesondere Verdichtergehäusen, kommt es insbesondere im instationären Betrieb häufig zu Temperaturunterschieden zwischen verschiedenen Modulen des Druckbehälters. Beispielsweise kann bei einem Hochdruckturboverdichter ein im Wesentlichen zylindrisches Grundgehäuse stirnseitig mittels eines Deckels verschlossen sein, der bevorzugt zumindest teilweise in axialer Überdeckung in dem Druckbehälter angeordnet ist. In Folge von Temperaturunterschieden kommt es zu radial thermischer Relativdehnung zwischen dem stirnseitigen Deckel und dem zumindest teilweise ummantelnden Gehäusegrundkörper, wofür entsprechende Bewegungsspiele vorgehalten werden müssen. Hinzukommt, dass auch in stationären Betrieb Temperaturdifferenzen zwischen den beschriebenen Gehäusebauteilen bewusst aufrecht erhalten werden müssen, damit Randbedingungen für andere Bauelemente erfüllt werden. Beispielsweise müssen Gasdichtungen in einem verhältnismäßig engen Temperaturbereich betrieben werden, so dass in der Kältetechnik Temperaturen von unter -100°C ein Beheizen der Gasdichtung erforderlich machen, um im Zulässigkeitsbereich die Gasdichtung betreiben zu können. Zumindest in dem Bereich der hinsichtlich der sich in Längsrichtung entlang eines Rotors erstreckenden Maschinenachse axialen Überdeckung zwischen dem Deckel und dem Gehäusemantel müssen von dem Außendurchmesser des Deckels abhängige Radialspiele von beispielsweise 2mm/1000mm Außendurchmesser des Deckels vorgesehen werden. Der jüngste Trend zu immer größeren Verdichterbauformen führt zu Spielen, die sich nicht mehr mittels herkömmlicher statischer Dichtungen abdichten lassen, weil diese bei den anstehenden Drücken und der Größe der abzudichtenden Spalte in den Spalten zerstört werden.

Aus der US 2 330425 A ist eine Dichtung bekannt, die mittels Neoprenelementen gegen Korrosion geschützt ist wobei die Neoprenelemente zusätzlich sich axial unter Druck dichtend aufweiten.

Aus der US 3 083 023 A ist eine sich axial federnd aufweitende Dichtung bekannt.

Aus der EP 1 933 038 A1 ist eine Anordnung mit einem Druckbehälter und einer O-Ringdichtung bekannt, die einen Deckel des Druckbehälters abdichtet.

EP 0 766007 A1, US 5 799 953 A zeigen jeweils eine U-förmige Dichtung.

US 2 058 017 A zeigt eine Anordnung gemäß dem Oberbegriff des Anspruchs 1.

Ausgehend von den oben beschriebenen Problemen hat es sich die Erfindung zur Aufgabe gemacht, besonders große Spalte zwischen zwei relativ zueinander ruhenden Bauteilen abzudichten.

Zur Lösung dieser Aufgabe schlägt die Erfindung eine Weiterbildung der eingangs definierten Anordnung mittels Merkmalen des Kennzeichens des Anspruchs 1 vor. Weiterhin wird vorgeschlagen, den Verdichter der eingangs definierten Art mit den Merkmalen des Anspruchs 6 weiterzubilden.

Eine radiale Ebene gemäß Anspruch 1 ist eine Ebene, die sich zu einer zentralen Achse der Dichtung derart senkrecht erstreckt, dass die Achse eine Normale zu der Ebene darstellt. Ein Vorteil der Spiegelsymmetrie der Dichtung zu dieser Ebene ist die Unabhängigkeit der Funktion von der Einbaurichtung.

Herkömmliche Anordnungen, Dichtungen und Verdichter mit derartigen Anordnungen hatten den Nachteil, dass in Folge des Überdrucks aus dem Radialabschnitt des Spaltes und der Weite des Spaltes die Dichtung aus der Dichtungskammer in den Spalt hineingedrückt worden ist zumindest an einigen Stellen des Umfangs und schließlich zerstört wurde in Folge dieser Verformung. Die daraus entstehenden Undichtigkeiten erfordern eine aufwändige Demontage, was die Verfügbarkeit der Maschine gravierend einschränkt. Zusätzlich stellt eine derartig defekt anfällige Dichtung ein gravierendes Sicherheitsrisiko dar, da beispielsweise toxisches Prozessfluid unter hohen Druck in die Umgebung austreten kann.

Besonders bevorzugt findet die Erfindung bei einem Durchmesser der ringförmigen Dichtung von mehr als 1000mm. Bei diesen Abmessungen verlangen potentielle thermische Relativdehnungen einen großen Radialspalt des Deckels zu dem Gehäusegrundkörper bzw. der beiden zueinander abzudichtenden Bauteile eines Druckbehälters.

Besonders zweckmäßig weist der Stützring eine gegenüber dem abzudichtenden Radialspalt des Radialabschnitts größere radiale Erstreckung auf, so dass auch bei großen Druckunterschieden der Abdichtung ein Eintritt der Dichtung in den Radialabschnitt grundsätzlich ausgeschlossen ist.

Der höhere Widerstand des Stützelementes gegen eine Verformung gegenüber dem Mantelelement kann dadurch realisiert werden, dass das Stützelement aus Metall besteht und das Mantelelement aus einem Kunststoff, der derartig flexibel ist, dass sich die axialen Begrenzungswände unter dem Druck des Prozessfluids im Axialabschnitt des Spaltes an die Seitenwände der Dichtungskammer anlegen.

Das Anlegen der Dichtung an die Seitenwände der Dichtungskammer bzw. das Anlegen der axialen Begrenzungswände der in der Dichtung sich in Umfangsrichtung erstreckenden Ausnehmung kann zweckmäßig mittels eines V-förmigen und sich in Umfangsrichtung erstreckenden Federelementes unterstützt sein. Hierbei ist es zweckmäßig, wenn das Federelement eine Vorspannung gegenüber den axialen Begrenzungswänden aufweist. Sinnvoll ist der Bereich des V-förmigen Querschnitts des Federelementes, wo die beiden Schenkel der V-Form zusammentreffen radial innen angeordnet, so dass die beiden auseinanderstrebenden Enden der V-Form von innen in der Ausnehmung an den axialen Begrenzungswänden der Ausnehmung anliegen und diese in axialer Richtung auseinanderdrücken.

Eine andere zweckmäßige Weiterbildung sieht vor, dass die axialen Begrenzungswände an der Stelle, wo die V-Form der Feder diese axialen Begrenzungswände von innen berührt, jeweils ein sich nach innen erstreckenden Vorsprung aufweisen, welcher derart ausgebildet ist, dass das Federelement gegen ein Austreten aus der umlaufenden Ausnehmung durch den Vorsprung gesichert ist.

Eine weitere vorteilhafte Weiterbildung der Erfindung sieht vor, dass das Stützelement auf der Seite, welche dem Mantelelement zugewendet ist, eine Konturierung aufweist und das Mantelelement auf der dem Stützelement gegenüberliegenden Seite eine korrespondierende Konturierung aufweist, so dass die beiden Konturierungen miteinander einen Formschluss ergeben. Zweckmäßig kann die Konturierung an dem Stützelement hierzu eine umlaufende Erhebung sein und korrespondierend dazu an dem Mantelelement eine umlaufende Ausnehmung.

Im Folgenden ist die Erfindung anhand eines speziellen Ausführungsbeispiels unter Bezugnahme auf Zeichnungen näher beschrieben. Dem Fachmann ergeben sich neben den speziellen Ausführungsbeispielen aus der Beschreibung und einer beliebigen Kombination der Hauptansprüche mit den rückbezogenen Unteransprüchen zusätzliche Möglichkeiten, die Erfindung auszuführen. Es zeigen:
- Figur 1: einen Querschnitt durch einen erfindungsgemäßen Druckbehälter eines Turboverdichters,
- Figur 2: das Detail II der Figur 1 darstellend eine erfindungsgemäße Dichtung in einer erfindungsgemäßen Anordnung.

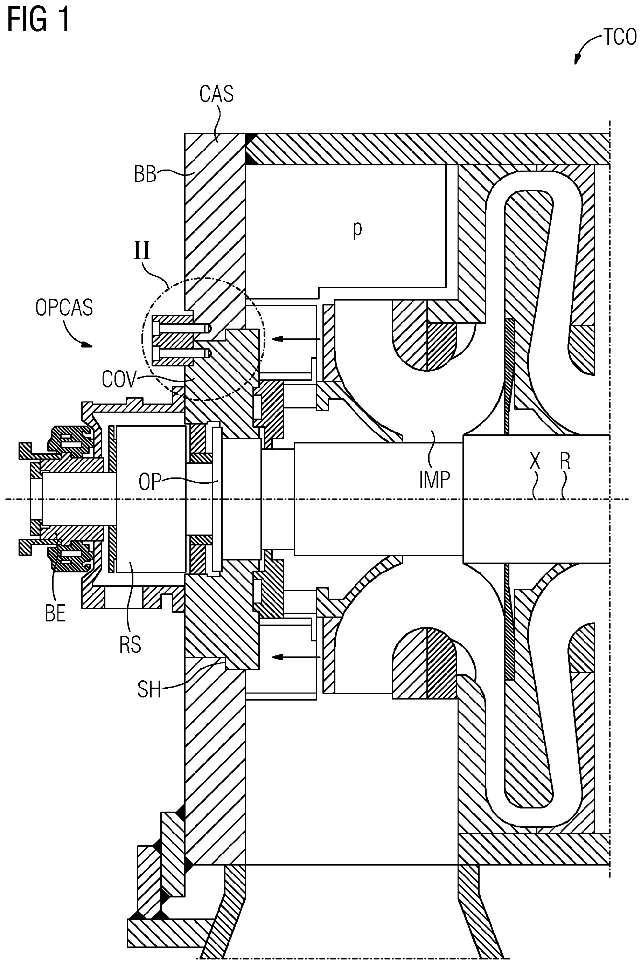

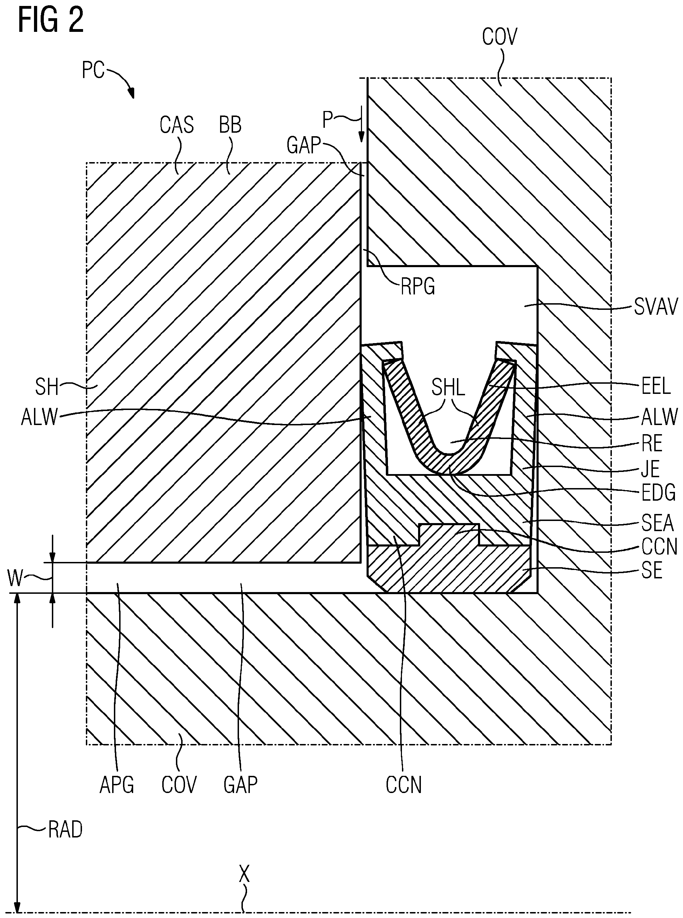

Die Terminologie dieser Patentanmeldung ist derart, dass sämtliche Richtungsangaben, wie axial, radial oder Umfangsrichtung auf eine Maschinenachse X, wie sie in den Figuren 1,2 angegeben ist, bezogen sind.

Figur 1 zeigt einen erfindungsgemäßen Druckbehälter CAS in der besonders vorteilhaften Anwendungsform der Erfindung an einem Turboverdichter TCO. Der Turboverdichter TCO weist einen sich entlang der Maschinenachse X erstreckenden Rotor R auf, der vom Inneren des Druckbehälters CAS durch eine Öffnung OP eines Deckels COV nach außen geführt ist. Der Deckel COV ist von innen in das Druckbehälter CAS eingesetzt, wo er durch einen Überdruck T in dem Druckbehälter CAS nach außen gegen einen Absatz SH an dem Druckbehälter CAS gedrückt wird, welcher Absatz sich in Umfangsrichtung an der mit dem Deckel COV zu verschließenden Gehäuseöffnung OPCAS erstreckt. Der Deckel COV ist außerdem Träger eines Radiallagers BE und einer Wellendichtungsanordnung RS. Der Druckbehälter CAS weist einen Behältergrundkörper BB und einen Deckel COV auf, der die Behältergrundkörperöffnung OPCAS verschließt.

Das mit II in Figur 1 ausgewiesene Detail ist in Figur 2 dargestellt. Zwischen dem Druckbehälter CAS und dem Deckel COV befindet sich ein in Umfangsrichtung erstreckender Spalt GAP. Der Bereich des Spaltes GAP, der in Figur 2 dargestellt ist, ist L-förmig und lässt sich in einem Axialabschnitt APG und einem Radialabschnitt RPG untergliedern. Der Radialabschnitt RPG neigt unter dem Innendruck P des Druckbehälters sich zu verengen. Der Axialabschnitt APG weist eine Weite W auf, die den Anforderungen an thermische Relativdehnungen zwischen dem Deckel COV und dem Behältergrundkörper BG genügen muss.

Je nach Größe des Außendurchmessers bzw. des Radius des Deckels COV, auf dem sich der Axialabschnitt APG befindet, muss sich bei vorgegebenem thermischem Parametern ein hinreichendes Bewegungsspiel durch die Breite W im Bereich des Axialabschnittes ergeben. Bei einem Radius von etwa 500mm sollte die Breite W nicht weniger als 2mm betragen, wenn eine Temperaturdifferenz zwischen zumindest Teilen des Deckels COV und dem Gehäusegrundkörper BB bis zu 50 Kelvin betragen kann. Dieser Richtwert gilt für metallische Werkstoffe, die im Wesentlichen identische Ausdehnungskoeffizienten haben für den Deckel COV und den Grundkörper BB. Bei unterschiedlichen Wärmeausdehnungskoeffizienten ist diese Dimensionierungsregel anzupassen.

An der Stelle, wo der Axialabschnitt APG und der Radialabschnitt RPG aufeinandertreffen, ist eine sich in Umfangsrichtung erstreckende Dichtungskammer SCAV rechteckigen Querschnitts vorgesehen.

In der Dichtungskammer SCAV ist eine Dichtung SEA angeordnet. Die Dichtung SEA umfasst jeweils sich in Umfangsrichtung erstreckende Bauteile: Stützelement SE, Mantelelement JE und Federelement EEL.

Das Stützelement SE befindet sich radial innen und das Mantelelement JE schließt sich an das Stützelement SE radial außen an, wobei die Grenzfläche zwischen den beiden Elementen mit einer Konturierung CCN versehen ist, die für einen Formschluss sorgt. Konkret weist das Stützelement SE einen sich in Umfangsrichtung erstreckenden Vorsprung PRO auf, der sich in Form einer sich in Umfangsrichtung erstreckenden Ausnehmung in dem Mantelelement JE formschlüssig abbildet. Das Stützelement SE weist eine radiale Höhe auf, die größer ist als die radiale Breite W des Axialabschnittes APG. Die axiale Ausdehnung des Stützelementes SE ist geringer als die axiale Breite der Dichtungskammer SCAV. Auf diese Weise hindert das Stützelement SE nicht an einer axialen Verringerung der Breite des Radialabschnittes RPG des Spaltes GAP. Das Stützeelement SE ist aus einem weniger leicht verformbaren Material als das Mantelelement JE - hier besteht es aus Metall.

Das Mantelelement JE, welches aus Kunststoff besteht, weist eine radial nach außen weisende und sich in Umfangsrichtung erstreckende Ausnehmung RE auf. Die Ausnehmung RE hat einen im Wesentlichen rechteckigen Querschnitt und ist von zwei axialen Begrenzungswänden ALW beidseitig begrenzt.

Ein Federelement EEL von V-förmigen Querschnitt ist in der Ausnehmung RE derart angeordnet, dass die V-Form des sich in Umfangsrichtung erstreckenden elastischen Federelementes EEL mit ihrer Öffnung nach radial außen weist. Mit anderen Worten: der Bereich des V-förmigen Querschnitts, eine Zusammenführungskante EDG, an der zwei Schenkel SHL der V-Form zusammenlaufen, befindet sich radial innen der Ausnehmung RE. Die beiden radial äußeren Enden der beiden Schenkel der V-Form des Querschnitts berühren linienartig die beidseitig axialen Begrenzungswände ALW. Durch diese vorgespannte Berührung werden die beiden axialen Begrenzungswände ALW axial auseinander gedrückt und es kommt zur Anlage an axialen Begrenzungswänden der Dichtungskammer SCAV. Unter Einwirkung des Überdrucks P aus dem Inneren des Druckbehälters CAS weitet sich die Ausnehmung RE der Dichtung SEA zusätzlich auf und es kommt zu einer die Dichtigkeit herstellenden Anlage der Dichtung SEA an den Begrenzungswänden der Dichtungskammer SCAV.

## Patentansprüche

1. Anordnung mit einer ringförmigen Dichtung(SEA), die sich um eine Maschinenachse (X) erstreckt und einem Druckbehälter (CAS) zur Abdichtung eines sich entlang einer Umfangsrichtung erstreckenden L-förmigen Spaltes zwischen einem Behältergrundkörper (BB) und einem Deckel (COV), wobei sich ein Radialabschnitt (RPG) des Spaltes (GAP) in radialer Richtung und Umfangsrichtung erstreckt und ein Axialabschnitt (APG) sich in axialer Richtung und Umfangsrichtung erstreckt, wobei im Bereich, wo der Radialabschnitt (RPG) und der Axialabschnitt (APG) zusammentreffen eine Dichtungskammer (SCAV) vorgesehen ist, welche radial und axial gegenüber dem angrenzenden Spaltabschnitten aufgeweitet ist, wobei in der Dichtungskammer (SCAV) eine Dichtung (SEA) angeordnet ist, wobei in dem Radialabschnitt (RPG) ein höherer Druck anliegt als in dem Axialabschnitt (APG), welche Druckdifferenz mittels der Dichtung (SEA) abgedichtet wird,
**dadurch gekennzeichnet, dass**
- die Dichtung (SEA) einen radial innen angeordneten Stützring (SE) aufweist aus einem ersten Material,
- radial außen des Stützrings (SE) sich ein Mantelelement (JE) anschließt aus einem zweiten Material, welches leichter verformbar ist als das erste Material,
- wobei das Mantelelement (JE) radial außen eine umlaufende Ausnehmung (RE) aufweist, derart, das zwei axiale Begrenzungswände (ALW) der Ausnehmung (RE) des Mantelelementes (JE) unter Druckbeaufschlagung aus Richtung des Radialabschnittes (RPG) sich derart verformen, dass das Mantelelement (JE) sich axial aufweitet
- wobei die Dichtung bezüglich einer radialen Ebene spiegelsymmetrisch ist.

2. Anordnung nach Anspruch 1 ,
wobei in der Ausnehmung (RE) ein Federelement (EEL) vorgesehen ist, welches die beiden axialen Begrenzungswände (ALW) axial auseinander drückt.

3. Anordnung nach Anspruch 1 oder 2,
wobei das Federelement (EEL) ein V-förmiges Querschnittsprofil aufweist mit einer radial innen liegenden Zusammenführungskante (EDG) der beiden Schenkel (SHL) der V-Form.

4. Anordnung nach Anspruch 1, 2 oder 3,
wobei das Stützelement (SE) seitens des Mantelelementes (JE) eine Konturierung (CCN) aufweist und das Mantelelement (JE) eine korrespondierende Konturierung (CCN) aufweist, so dass zwischen dem Mantelelement (JE) und dem Stützelement (SE) ein Formschluss vorliegt.

5. Anordnung nach Anspruch 4,
wobei das Stützelement (SE) seitens des Mantelelementes (JE) eine sich in Umfangsrichtung erstreckende Konturierung (CCN) aufweist und das Mantelelement (JE) eine korrespondierende sich in Umfangsrichtung erstreckende Konturierung (CCN) aufweist.

6. Druckbehälter (PC), insbesondere Gehäuse (CAS) eines Turboverdichters (TCO), mit einer Anordnung gemäß einem der vorhergehenden Ansprüche.

## Claims

1. Arrangement having an annular seal (SEA) which extends about a machine axis (X), and a pressure vessel (CAS) for sealing an L-shaped gap which extends along a circumferential direction between a vessel main body (BB) and a cover (COV), a radial section (RPG) of the gap (GAP) extending in the radial direction and circumferential direction and an axial section (APG) extending in the axial direction and circumferential direction, a seal chamber (SCAV) being provided in the region where the radial section (RPG) and the axial section (APG) meet, which seal chamber (SCAV) is widened radially and axially with respect to the adjacent gap sections, a seal (SEA) being arranged in the seal chamber (SCAV), a higher pressure prevailing in the radial section (RPG) than in the axial section (APG), which pressure difference is sealed by means of the seal (SEA),
**characterized in that**
- the seal (SEA) has a supporting ring (SE) which is arranged radially on the inside and is made from a first material,
- a jacket element (JE) which is made from a second material which is more readily deformable than the first material adjoins the supporting ring (SE) radially on the outside,
- the jacket element (JE) having a circumferential recess (RE) radially on the outside, in such a way that two axial bounding walls (ALW) of the recess (RE) of the jacket element (JE) are deformed under pressure loading from the direction of the radial section (RPG) in such a way that the jacket element (JE) is widened axially,
- the seal being mirror-symmetrical with regard to a radial plane.

2. Arrangement according to Claim 1,
a spring element (EEL) being provided in the recess (RE), which spring element (EEL) presses the two axial bounding walls (ALW) axially apart from one another.

3. Arrangement according to Claim 1 or 2,
the spring element (EEL) having a V-shaped cross-sectional profile with a radially inner merging edge (EDG) of the two limbs (SHL) of the V-shape.

4. Arrangement according to Claim 1, 2 or 3,
the supporting element (SE) having a contour (CCN) on the side of the jacket element (JE), and the jacket element (JE) having a corresponding contour (CCN), with the result that there is a positively locking connection between the jacket element (JE) and the supporting element (SE).

5. Arrangement according to Claim 4,
the supporting element (SE) having, on the side of the jacket element (JE), a contour (CCN) which extends in the circumferential direction, and the jacket element (JE) having a corresponding contour (CCN) which extends in the circumferential direction.

6. Pressure vessel (PC), in particular a housing (CAS) of a turbocompressor (TCO), having an arrangement according to one of the preceding claims.

## Revendications

1. Agencement comprenant un joint (SEA) d'étanchéité annulaire, qui s'étend autour de l'axe (X) d'une machine, et un récipient (CAS) sous pression pour rendre étanche un intervalle en forme de L s'étendant suivant une direction périphérique entre un corps (BB) de base du récipient et un couvercle (COV), une partie (RPG) radiale de l'intervalle (GAP) s'étendant dans la direction radiale et dans la direction périphérique et une partie (APG) axiale s'étendant dans la direction axiale et dans la direction périphérique, dans lequel, dans la région, où la partie (RPG) radiale et la partie (APG) axiale se rencontrent, est prévue une chambre (SCAV) d'étanchéité, qui s'élargit radialement et axialement par rapport aux parties voisines de l'intervalle, dans lequel il est disposé, dans la chambre (SCAV) d'étanchéité, un joint (SEA) d'étanchéité, dans lequel, dans la partie (RPG) radiale, s'applique une pression plus haute que dans la partie (APG) axiale, différence de pression que le joint (SEA) d'étanchéité empêche de transmettre, **caractérisé en ce que**
- le joint (SEA) d'étanchéité a une bague (SE) d'appui disposée à l'intérieur radialement en un premier matériau,
- à l'extérieur radialement de la bague (SE) d'appui, se raccorde un élément (JE) d'enveloppe en un deuxième matériau, qui peut se déformer plus facilement que le premier matériau,
- dans lequel l'élément (JE) d'enveloppe a, à l'extérieur radialement, un évidement (RE) faisant le tour, de manière à ce que deux parois (ALW) de délimitation axiale de l'évidement (RE) de l'élément (JE) d'enveloppe se déforment en étant soumises à une pression dans la direction de la partie (RPG) radiale, de façon à ce que l'élément (JE) d'enveloppe s'élargisse axialement,
- dans lequel le joint d'étanchéité est symétrique comme en un miroir par rapport à un plan radial.

2. Agencement suivant la revendication 1,
dans lequel, dans l'évidement (RE), est prévu un élément (EEL) de ressort, qui repousse l'une de l'autre axialement les deux (ALW) parois de délimitation axiale.

3. Agencement suivant la revendication 1 ou 2,
dans lequel l'élément (EEL) de ressort a un profil de section transversale en forme de V, en ayant un bord (EDG) de réunion, se trouvant à l'intérieur radialement, des deux branches (SHL) de la forme en V.

4. Agencement suivant la revendication 1, 2 ou 3,
dans lequel l'élément (SE) d'appui a, du côté de l'élément (JE) d'enveloppe, un contour (CCN) et l'élément (JE) d'enveloppe a un contour (CCN) correspondant, de manière à avoir une complémentarité de forme entre l'élément (JE) d'enveloppe et l'élément (SE) d'appui.

5. Agencement suivant la revendication 4,
dans lequel l'élément (SE) d'appui a, du côté de l'élément (JE) d'enveloppe, un contour (CCN) s'étendant dans la direction périphérique et l'élément
(JE) d'enveloppe a un contour (CCN) s'étendant de manière correspondante dans la direction périphérique.

6. Récipient (PC) sous pression, notamment carter (CAS) d'un turbocompresseur (TCO), ayant un agencement suivant l'une des revendications précédentes.
